Europäisches Patentamt

European Patent Office

Office européen des brevets

(11) Veröffentlichungsnummer: **0 326 095**
**A2**

## (12) EUROPÄISCHE PATENTANMELDUNG

(21) Anmeldenummer: **89101252.8**

(22) Anmeldetag: **25.01.89**

(51) Int. Cl.⁴: **B22C 7/02 , B22C 1/04**

(30) Priorität: **29.01.88 DE 3802727**
**04.07.88 DE 3822601**

(43) Veröffentlichungstag der Anmeldung:
**02.08.89 Patentblatt 89/31**

(84) Benannte Vertragsstaaten:
**CH ES FR GB LI NL SE**

(71) Anmelder: **FMI FULL MOLD INTERNATIONAL GMBH**
**Bürgermeister-Grünzweig-Strasse 1**
**D-6700 Ludwigshafen(DE)**

(72) Erfinder: **Wittmoser, Adalbert, Prof. Dr. Ing.**
**Matthias-Grünewald-Str. 8**
**D-6840 Lampertheim(DE)**

(54) **Verfahren zur Herstellung von metallischen Gussteilen mittels des Vollformgiessens.**

(57) Bei einem Verfahren zur Herstellung von metallischen Gußteilen mittels des Vollformgießens unter Verwendung von verlorenen Gießmodellen wird mindestens eine metallorganische Verbindung als Wirkstoff zugesetzt, die die Bildung von festem Kohlenstoff bei der Vergasung des verlorenen Gießmodelles teilweise oder ganz verhindert. Man erhält Gußteile, die keine wesentlichen Kohlenstoffabscheidungen an der Oberfläche aufweisen. Besonders geeignete Wirkstoffe sind Metallocene, z. B. Ferrocen, Aluminocen und Manganocen. Ein Schaumkunststoff und ein Additiv, die den Wirkstoff enthalten, sind zur Durchführung des Verfahrens besonders geeignet.

EP 0 326 095 A2

## Verfahren zur Herstellung von metallischen Gußteilen mittels des Vollformgießens

Die Erfindung betrifft ein Verfahren gemäß dem Oberbegriff des Patentanspruches 1. Die Erfindung betrifft weiterhin einen Schaumkunststoff, ein expandierbares Polymerisat zur Herstellung des Schaumkunststoffes sowie ein Additiv zur Verwendung als Zusatz beim Schaumkunststoff und beim expandierbaren Polymerisat.

Beim Vollformgießen finden verlorene Gießmodelle aus Schaumkunststoffen Verwendung. Diese Modelle werden nicht -wie es beim Feingießen erfolgt - vor dem Eingießen der Schmelze in die Gießform aus dieser entfernt, sondern direkt durch die Metallschmelze, die in die Vollform, d. h. in die mit dem verlorenen Modell gefüllte Form einfließt, vergast ("thermisch aufgelöst").

Als Grundmaterial für die zur Herstellung der verlorenen Gießmodelle benutzten Schaumkunststoffe wird im Stand der Technik praktisch ausschließlich geschäumtes Polystyrol eingesetzt.

Die Verwendung dieses Schaumstofftyps für verlorene Gießmodelle hat jedoch den wesentlichen Nachteil, daß bei seiner thermischen Auflösung etwa 50 % des Modellgewichtes in Form von festem Kohlenstoff (Ruß bis Glanzkohlenstoff) anfallen. Dadurch können in Gußteilen, die nach dem Vollformgießen hergestellt werden, Fehler entstehen. Diese Fehler beeinträchtigen wiederum die Verwendbarkeit der Gußteile, so daß spezielle technologische Maßnahmen erforderlich waren, um das Auftreten dieser häufig als "Rückstände" bezeichneten Fehler in Grenzen zu halten. Zu diesem Zweck wurde daher entsprechend der DE-PS 12 18 662 der Schaumkunststoff mit einem Flammenschutzmittel versetzt, dessen Verzögerungswirkung auf die Zersetzung des Schaumstoffes durch den Zusatz einer Radikale bildenden Substanz und/oder Ruß bzw. Graphit als festen Kohlenstoff beruht.

Weiterhin hat es nicht an Versuchen gefehlt, anstelle von Polystyrolschaum solche Schaumkunststoffe einzusetzen, die einen geringeren Kohlenstoffgehalt und damit auch eine geringere Bildung von festem Kohlenstoff beim Vollformgießen aufweisen. Es zeigte sich jedoch, daß diese Schaumkunststoffe in verschiedenem Ausmaß gegenüber dem Polystyrolschaum Nachteile aufwiesen, ohne daß das Problem der Bildung von festem Kohlenstoff völlig gelöst wurde.

Der Erfindung liegt daher die Aufgabe zugrunde, die Nachteile, die beim bekannten Verfahren zur Herstellung von metallischen Gußteilen mittels des Vollformgießens unter Verwendung von verlorenen Gießmodellen auftreten, weitgehend oder vollständig zu beseitigen. Diese Aufgabe wird erfindungsgemäß durch das Merkmal des kennzeichnenden Teils des Anspruches 1 gelöst.

Gemäß dem vorgeschlagenen Verfahren erfolgt die "thermische Auflösung" oder "Vergasung" des Schaumkunststoffes nahezu vollständig, so daß bei den Gußstücken nahezu keine durch festen Kohlenstoff bewirkte Fehler, wie Einschlüsse und Aufkohlung der Oberfläche, auftreten.

Gemäß einer bevorzugten Ausführungsform setzt man als Wirkstoff mindestens eine metallorganische Verbindung, insbesondere ein Metallocen ein. Es wurde überraschend gefunden, daß Metallocene, wie insbesondere Ferrocen, Aluminocen und Manganocen die vollständige "Vergasung" des Schaumstoffes schnell und effektiv bewirken.

Auch Derivate der Metallocene haben dieselbe Wirkung, so daß die Frage, ob Metallocenverbindungen oder die Derivate oder Mischungen hieraus eingesetzt werden, nach wirtschaftlichen Gesichtspunkten zu beantworten ist.

So konnte sowohl bei einem mit 0,05 als auch bei einem mit 0,1 Gew.-% Ferrocen versetzten Gießmodell aus Polystyrolschaum die Bildung von festem Kohlenstoff während des Vergasungsvorganges in der Vollform nach Füllung der Vollform mit einer Gußeisenschmelze (GGG) um 50 bis 70 Gew.-% verringert werden. Diese Verminderung der Bildung von festem Kohlenstoff reichte bereits aus, um die bisher aufgetretenen Fehler am Gußstück, wie z. B. Beeinträchtigung der Qualität der Gußoberfläche durch Graphitansammlungen zu vermeiden.

Die vollständige "thermische Auflösung" der Vollform wurde bei diesen Versuchen mit technologischen Maßnahmen, wie z. B. dem Zusatz eines organischen Farbstoffes, der die Wärmestrahlung der Schmelze bei der Gießtemperatur gut absorbiert (vergleiche DE-PS 1 234 937) unterstützt. Weiterhin konnte durch die erfindungsgemäße Zugabe der Wirkstoffe auch zur Schlichte, mit der das verlorene Gießmodell überzogen werden kann, eine Intensivierung des vorbeschriebenen Effektes erreicht werden. In manchen Fällen genügt bereits die Verwendung eines der erfindungsgemäß vorgeschlagenen Wirkstoffe als Zusatz zur Schlichte allein, um die gewünschte Wirkung der Erzielung qualitativ einwandfreier Vollformgußteile zu erreichen.

Es kann weiterhin vorteilhaft sein, die vorgeschlagenen Wirkstoffe vor oder während des Einfließens der Schmelze durch Über- oder Unterdruck lediglich in den das verlorene Gießmodell umgebenden Formstoff einzubringen und allein dadurch eine Verminderung der Graphitbildung aus der "thermischen Auflösung" zu erreichen.

Je nach den Gegebenheiten können die erfindungsgemäßen Ausführungsformen einzeln oder in ihrer Kombination angewandt werden.

Der vorgeschlagene Schaumkunststoff, der in dem erfindungsgemäßen Verfahren eingesetzt wird, kann den Wirkstoff bereits in Mengen von 0,01 bis 1 Gew.-% enthalten. Vorzugsweise wird als Schaumkunststoff Polystyrol eingesetzt, das als Wirkstoff mindestens ein Metallocen enthält. Es ist jedoch auch möglich, andere Schaumkunststoffe als Polystyrol einzusetzen. Je nach Anwendungszweck lassen sich geschäumte Styrol-Copolymere, Polykarbonate, Polyolefine, Polyurethane, Polyisozyanurate, Polykarbodiimide, Polymethacrylimide, Polyamide und ABS-Schäume, Phenol- und Harnstoffharze (UF-Schäume) beim erfindungsgemäßen Verfahren verwenden.

Der zur Verwendung im genannten Verfahren geeignete Schaumkunststoff kann aus expandierbarem Polymerisat hergestellt werden, das der Hersteller des Schaumstoffes in Form kleiner massiver, mit einem Treibmittel versetzter ungeschäumter Perlen vom Polymerisathersteller beziehen kann. Solche Perlen können z. B. durch Suspensionspolymerisation unter Zugabe von Treibmitteln hergestellt werden. Es ist vorteilhaft, bereits diese Perlen mit dem mindestens eine metallorganische Verbindung enthaltenden Wirkstoff zu versehen. Dies kann z. B. beim Umgranulieren der durch Suspensionspolymerisation erhaltenen Perlen erfolgen.

Andererseits ist es auch möglich, Schaumkunststoffe durch Extrusionsverfahren herzustellen. In diesem Falle wird der mindestens eine metallorganische Verbindung enthaltende Wirkstoff dem zu extrudierenden Polymerisat zugesetzt.

Die metallorganische Verbindung kann ungelöst in feinteiliger Form oder in Form einer Lösung in einem geeigneten Lösungsmittel zugesetzt werden. So ist z. B. die besonders bevorzugte metallorganische Verbindung Ferrocen in Alkohol, Äther und Benzol löslich, während sie in Wasser unlöslich ist. Als expandierbares Polymerisat wird erfindungsgemäß insbesondere expandierbares Polystyrol eingesetzt.

Als Metallocen zum Zusatz haben sich insbesondere Ferrocen, Aluminocen und Manganocen als vorteilhaft für die Herstellung von Gußteilen aus üblichen Gußlegierungen erwiesen.

Dabei ist es vorteilhaft, wenn die Metallkomponente des verwendeten Metallocens einem der in der zur Herstellung der metallischen Gußteile verwendeten Schmelze enthaltenden Metalle entspricht. Auch aus diesem Grunde sind Ferrocen und Manganocen beim Stahlguß und bei Gußeisen bevorzugt.

Das erfindungsgemäße Additiv, das beim vorgeschlagenen Verfahren Anwendung findet, enthält als Wirksubstanz mindestens ein Metallocen und/oder sein Derivat, vorzugsweise Ferrocen und/oder Manganocen als Zusatz zu expandierbarem Polymerisat sowie als Zusatz zu Polymerisat, das zu Schaumstoff extrudierbar ist, insbesondere Polystyrol. Wegen der Beständigkeit des vorzugsweise im erfindungsgemäßen Additiv enthaltenen Ferrocens und/oder Manganocens ist dieses bei der Herstellung, beim Vertrieb und bei der Anwendung z. B. in Form einer Lösung, leicht und gefahrlos zu handhaben.

### Beispiel 1 (Vergleichsbeispiel)

Es wurden fertiggeschäumte Modelle für ein Automobilgußteil abgegossen, die aus Polystyrolschaum mit einem Raumgewicht von etwa 18 kp/m³ bestanden. Als Schmelze wurde eine Gußeisenlegierung (GGG) mit einer Gießtemperatur von 1390 °C benutzt. Die minimale Wanddicke betrug 4 mm, das Gewicht des Gußstückes betrug etwa 25 kg. Als Formstoff diente ein binderfreier Quarzsand. In der ersten Versuchsreihe wurden einige Modelle abgegossen, die frei von erfindungsgemäß eingesetzten Wirkstoffen waren. Die damit hergestellten Gußteile zeigten eine unbefriedigende Oberflächenqualität durch Graphitansammlungen besonders auf den nach oben gerichteten Oberflächen.

### Beispiel 2

Nach demselben Verfahren wurden eine Reihe gleicher Automobilgußteile wie in Beispiel 1 abgegossen, jedoch waren die verwendeten Schaumstoffmodelle mit Ferrocen in Gewichtsteilen von 0,05 bis 0,1 % versetzt worden. Anders als die Gußteile des Beispieles 1 zeigten die erhaltenen Gußteile dann eine einwandfreie Gußstückoberfläche.

### Beispiel 3 (Vergleichsbeispiel)

Es wurden Modelle für Getriebegehäuse abgegossen, die aus Polystyrolschaum mit einem Raumgewicht von etwa 18 kp/m³ bestanden. Als Schmelze wurde eine Gußeisenlegierung (GG) mit einer Gießtemperatur von 1360 °C benutzt. Die durchschnittliche Wanddicke betrug 35 mm; das Gewicht des Gußstückes lag bei etwa 450 kg. Als Formstoff diente ein Furanharz-gebundener Gießereisand. Zur Herstellung der Vollformen wurden einige Modelle verwendet, deren Polystyrolschaum frei von erfindungsgemäß eingesetzten Wirkstoffen war. Die so hergestellten Gußteile zeigten eine unbefriedigende Oberflächenqualität durch Graphitansammlungen besonders auf den nach oben gerichteten Oberflächen.

### Beispiel 4

Nach dem in Beispiel 3 beschriebenen Verfahren wurde sodann eine Reihe von Modellen für das gleiche Getriebegehäuse abgegossen, wobei jedoch die Schaumstoffmodelle mit Ferrocen in Gewichtsanteilen von 0,05 bis 0,1 % versetzt waren. Die übrigen Verfahrensbedingungen waren wie in Beispiel 3. Die erhaltenen Gußstücke zeigten eine einwandfreie Gußstückoberfläche.

### Beispiel 5

Durch Vergießen von Stahlschmelzen mit einem Kohlenstoffgehalt von 0,15 Gew.-% stellte man Gußstücke in Vollform her. Dazu wurden Modelle aus Polystyrolschaum mit einem Raumgewicht von etwa 18 kp/m$^{\circ}$ verwendet. Bei Verwendung von Modellen ohne Zusatz des erfindungsgemäßen Wirkstoffes wurde in den Randbereichen der Gußteile eine Aufkohlung bis zu 0,8 % beobachtet. Bei Verwendung von Modellen aus Polystyrolschaum mit einem Raumgewicht von etwa 18 kp/m$^{\circ}$, die mit dem erfindungsgemäßen Wirkstoff versetzt waren (0,05 bis 1 Gew.-% Ferrocen), wurden Gußstücke erhalten, bei denen keine merkliche Randaufkohlung festzustellen war.

## Ansprüche

1. Verfahren zur Herstellung von metallischen Gußteilen mittels des Vollformgießens unter Verwendung von verlorenen Gießmodellen aus Schaumkunststoff, **dadurch gekennzeichnet,** daß man mindestens einen Wirkstoff zusetzt, der die Bildung von Kohlenstoff bei der Vergasung des verlorenen Gießmodelles teilweise oder ganz unterbindet.

2. Verfahren nach Anspruch 1, **dadurch gekennzeichnet,** daß man als Wirkstoff mindestens eine metallorganische Verbindung einsetzt.

3. Verfahren nach Anspruch 1 und/oder 2, **dadurch gekennzeichnet,** daß man als Wirkstoff mindestens ein Metallocen und/oder sein Derivat einsetzt.

4. Verfahren nach Anspruch 3, **dadurch gekennzeichnet,** daß man als Metallocen Ferrocen, Manganocen und/oder Aluminocen einsetzt.

5. Verfahren nach einem der Ansprüche 1 bis 4, **dadurch gekennzeichnet,** daß man als Wirkstoff zusätzlich einen organischen Farbstoff einsetzt.

6. Verfahren nach mindestens einem der Ansprüche 1 bis 5, **dadurch gekennzeichnet,** daß man den Wirkstoff als Bestandteil des Schaumkunststoffes zusetzt.

7. Verfahren nach Anspruch 6, **dadurch gekennzeichnet,** daß man den Wirkstoff in einer Menge von 0,01 bis 1 Gew.-%, bezogen auf den Schaumkunststoff, zusetzt.

8. Verfahren nach mindestens einem der Ansprüche 1 bis 5, **dadurch gekennzeichnet,** daß man den Wirkstoff der das verlorene Gießmodell umgebenden Schlichte zusetzt.

9. Verfahren nach mindestens einem der Ansprüche 1 bis 5, **dadurch gekennzeichnet,** daß man den Wirkstoff als Bestandteil des Formstoffes, der das verlorene Gießmodell aus Schaumkunststoff umgibt, zusetzt.

10. Verfahren nach mindestens einem der Ansprüche 1 bis 5, **dadurch gekennzeichnet,** daß man den Wirkstoff vor oder während des Einfließens der Schmelze in die Vollform saugt oder drückt.

11. Verfahren nach mindestens einem der Ansprüche 3 bis 10, **dadurch gekennzeichnet,** daß man mindestens ein Metallocen einsetzt, dessen Metallkomponente einem der in der zur Herstellung der metallischen Gußteile verwendeten Schmelze enthaltenen Metallen entspricht.

12. Schaumkunststoff zur Verwendung in dem Verfahren gemäß Anspruch 1, **dadurch gekennzeichnet,** daß er den Wirkstoff in Anteilen von 0,01 bis 1 Gew.-% enthält.

13. Schaumkunststoff nach Anspruch 12, **dadurch gekennzeichnet,** daß er im wesentlichen aus Polystyrol besteht und als Wirkstoff mindestens ein Metallocen und/oder sein Derivat enthält.

14. Schaumkunststoff nach Anspruch 12 und/oder 13, **dadurch gekennzeichnet,** daß er als Metallocen Ferrocen, Aluminocen und/oder Manganocen enthält.

15. Expandierbares Polymerisat zur Herstellung des Schaumkunststoffes gemäß einem der Ansprüche 12 bis 14, **gekennzeichnet durch** den Gehalt an mindestens einem eine metallorganische Verbindung enthaltenden Wirkstoff, der die Bildung von Kohlenstoff bei der Vergasung des verlorenen Gießmodelles teilweise oder ganz unterbindet.

16. Expandierbares Polymerisat nach Anspruch 15, **gekennzeichnet durch** einen Gehalt von 0,01 bis 1 Gew.-% Wirkstoff.

17. Expandierbares Polymerisat nach Anspruch 15 und/oder 16, **dadurch gekennzeichnet,** daß die metallorganische Verbindung ein Metallocen und/oder sein Derivat ist.

18. Expandierbares Polymerisat nach Anspruch 17, **dadurch gekennzeichnet,** daß das Metallocen Ferrocen, Aluminocen und/oder Manganocen ist.

19. Expandierbares Polystyrol nach einem der Ansprüche 15 bis 18.

20. Additiv zur Verwendung in dem Verfahren gemäß Anspruch 1, **dadurch gekennzeichnet,** daß es als Wirksubstanz mindestens ein Metallocen und/oder sein Derivat enthält.

21. Additiv nach Anspruch 20, **dadurch gekennzeichnet,** daß es Ferrocen, Aluminocen und/oder Manganocen enthält.

22. Verwendung des Additivs nach Anspruch 20 und/oder 21 als Zusatz zu expandierbarem Polymerisat nach einem der Ansprüche 15 bis 19.

23. Verwendung des Additivs nach Anspruch 20 und/oder 21 als Zusatz zu Polymerisat, das zu Schaumkunststoff extrudierbar ist.